# EUROPEAN PATENT SPECIFICATION

(11) **EP 0 623 052 B1**
(45) Date of publication and mention of the grant of the patent: **18.09.1996**
(21) Application number: 93904559.7
(22) Date of filing: 21.01.1993
(51) Int. Cl.: B01J 13/20

(54) **PROCESS FOR FORMALDEHYDE CONTENT REDUCTION IN MICROCAPSULE FORMULATIONS**
REDUZIERUNG DES FOMALDEHYDEGEHALTS IN MIKROKAPSEL FORMULIERUNG
PROCEDE DE REDUCTION DE TENEUR EN FORMALDEHYDE DE FORMULATIONS DE MICROCAPSULES

(30) Priority: 22.01.1992 US 823740
(43) Date of publication of application: 09.11.1994
(73) Proprietor: ZENECA LIMITED, London W1Y 6LN (GB)
(72) Inventor: Scher, Herbert B., Morgara, CA 94556 (US); Rodson, Marius, El Sobrante, CA 94803 (US); Davis, Richard W., Groveland, CA 95321 (US); Baker, Don R., Orinda, CA 94563 (US); Kezerian, Charles, Orinda, CA 94563 (US)
(74) Representative: Waterman, John Richard
(86) International application number: US9300531
(87) International publication number: WO9314865

(56) References cited:
- EP-A- 0 009 413
- US-A- 4 046 741
- US-A- 4 956 129
- DATABASE WPIL Week 8907, Derwent Publications Ltd., London, GB; AN 89-049230

## Description

### BACKGROUND OF THE INVENTION

### Field of the Invention

This invention relates to microcapsules and to a process for reducing the formaldehyde content of formulations containing microcapsules. In particular, this invention relates to encapsulated droplets of a liquid material which is substantially insoluble in water, where the encapsulating agent is a film formed from an amino resin and preferentially from a modified urea-formaldehyde prepolymer.

### Description of the Prior Art

The use of membranes, coatings, and capsules for the controlled release of liquid materials is well known in the art of both agricultural and non-agricultural chemicals. In agriculture, controlled release techniques have improved the efficiency of herbicides, insecticides, fungicides, bactericides, and fertilizers. Non-agricultural uses include encapsulated dyes, inks, pharmaceuticals, flavoring agents, and fragrances.

The most common forms of controlled release materials are coated droplets or microcapsules, coated solids including both porous and non-porous particles, and coated aggregates of solid particles. In some instances, a water-soluble encapsulating film is desired, which releases the encapsulated material when the capsule is placed in contact with water. Other coatings are designed to release the entrapped material when the coating is ruptured by external force.

Still further coatings are porous in nature and release the entrapped material to the surrounding medium at a slow rate by diffusion through the pores. In addition to providing controlled release, such coatings also serve to facilitate the dispersion of water-immiscible liquids into water and water-containing media such as wet soil. Droplets encapsulated in this matter are particularly useful in agriculture, where water from irrigation, rain, and water sprays is frequently present. A variety of processes for producing such capsules is known.

In one process, the capsules are formed by phase separation from an aqueous solution through the coacervation of a hydrophilic colloid soil. This is described in U.S. Patents 2,800,457 (Green et al., July 23, 1957) and 2,800,458 (Green, July 23, 1957).

An interfacial polymerization process is disclosed in U.S. Patents 4,046,741 (Scher, September 6, 1977) and 4,140,516 (Scher, February 20, 1979), whereby the film-forming reactants are dissolved in the hydrophobic liquid which is dispersed in water, the reaction occurring at the interface when the phases are placed in contact as an emulsion.

A further interfacial polymerisation process is described in U.S. Patent 3,726,804 (Matsukawa et al., April 10, 1973) whereby all the film-forming ingredients initially reside in hydrophobic droplets which also contain a low boiling or polar solvent in addition to the material to be encapsulated. Upon heating, the solvent is released into the aqueous phase (the continuous phase of the emulsion), and the film-forming materials accumulate at the interface and polymerize.

Olefin polymerization using a peroxide catalyst is described in Japanese Patent Publication No. 9168/1961, whereby an oil-insoluble polymer is formed at the surfaces of oil drops.

British Patents 952,807 and 965,074 describe a process whereby a solid such as wax or a thermoplastic resin is melted, dispersed and cooled to form an encapsulating film around liquid droplets.

U.S. Patent 3,111,407 (Lindquist et al., November 19, 1963) describes a spray drying method which forms encapsulated droplets at the instant of atomization.

These processes vary in terms of equipment expense, energy requirements, ease of controlling the microcapsule size, the need for extra reagents such as catalysys and settling agents, and percent microcapsule phase.

U.S. Patent 4,956,129, the disclosure of which is incorporated herein by reference, teaches the process in which a liquid material which is substantially insoluble in water can be microencapsulated withinb a porous poly(urea-formaldehyde) shell. However, formaldehyde develops when the methylol groups present in the urea-formaldehyde resin react with each other. Formaldehyde is the by-product of the resin polymerization.

EPO 9413 describes a process for reducing formaldehyde content from dispersions of microcapsules by stripping with steam or an inert gas. Disclosed as background in that reference are other techniques such as treating the dispersion with urea, sodium sulfite, or hydroxylamine hydrochloride.

It is, therefore, an object of the present invention to provide a simple, inexpensive method for reducing the formaldehyde content of formulations of microencapsules. Other objects of the invention will be apparent from the following description.

### SUMMARY OF THE INVENTION

It has now been discovered that a liquid material which is substantially insoluble in water can be microencapsulated within a porous amino resin shell wherein the formaldehyde content formed as a by-product of the microencapsulation process is no greater than 0.1% by a process which comprises:
(a) Providing an organic solution comprising said liquid material and an etherified amino resin prepolymer dissolved therein in which from about 50% to about 98% of the methylol groups of said prepolymer have been etherified with a C₄-C₁₀ alcohol;
(b) creating an emulsion of said organic solution in a continuous phase aqueous solution comprising water and a surface-active agent, wherein said emulsion comprises discrete droplets of said organic solution dispersed in said continuous phase aqueous solution, there being formed thereby an interface between the discrete droplets of organic solution and the surrounding continuous phase aqueous solution;
(c) causing in situ self-condensation and curing of said amino resin prepolymers in the organic phase of said discrete droplets adjacent to said interface by simultaneously heating said emulsion to a temperature between about 20°C to about 100°C, and adding to said emulsion an acidifying agent and maintaining said emulsion at a pH of between about 0 to about 4 for a sufficient period of time to allow substantial completion of in situ condensation of said resin prepolymers to convert the liquid droplets of said organic solution to capsules consisting of solid permeable polymer shells enclosing said liquid material; and
(d) post-treating the formulation of amino resin capsules with from about 0.03 wt. % to about 0.75 wt. % of ammonia.

The present invention resides in both the process described above and the microcapsules thus formed.

### Description of the Preferred Embodiment

In the process of forming microcapsules from a urea formaldehyde prepolymer, such as that disclosed in U.S. Patent 4,956,129, formaldehyde is formed as a by-product of the polymerization reaction of the urea formaldehyde prepolymer. Typically, the resulting microcapsule formulation contains about 0.5% of free formaldehyde.

The process of this invention comprises post-treating the formulation of amino resin microcapsules with from about 0.03 wt. % to about 0.75 wt. % of ammonia, effectively reducing the free formaldehyde content of the microcapsule formulation to no greater than 0.1% formaldehyde.

The treatment is preferably carried out by mixing a concentrated ammonia solution with the microcapsule formulation. Microcapsules formed by this process are capable of effecting a slow rate of release of the encapsulated liquid by diffusion through the shell to the surrounding medium. However, it has been discovered that treatment with significantly higher amounts of ammonia, in the range of 1.5 wt. %, severely damages the microcapsule wall and modifies the release characteristics of such a microcapsule formulation.

As taught in U.S. Patent No. 4,956,129, it is essential that the organic solution which forms the interior of the microcapsules (i.e., the core liquid) be substantially insoluble in water. The organic solution may consist of a single liquid material or one or more active liquid or solid materials dissolved in an inert solvent which has a slight solubility in water. In the latter case, the liquid or solid solute must reside preferentially in the organic phase when the two phases are in equilibrium.

A wide variety of liquids can be encapsulated by the present process. Any liquid which is not reactive with the amino resin prepolymer and which will diffuse through the shell membrane is suitable. Liquids suitable for encapsulation include chemical-biological agents such as herbicides, insecticides, fungicides, nematocides, bactericides, rodenticides, molluscides, acaricides, larvicides, animal, insect and bird repellants, plant growth regulators, fertilizers, pheromones, sex lures and attractants, and flavor and odor compositions. The microcapsules of the present invention are particularly well adapted to pesticides, including thiocarbamates, dithiocarbamates, acetamides, anilides, sulfonamides, triazines, organophosphorus compounds and pyrethroids. Examples of these compounds are disclosed in U.S. Patent No. 4,956,129.

Of the many different types of core liquids useful in the present composition, pesticides are preferred, and certain classes of pesticides are particularly preferred. One such class is that of substituted thiocarbamates, particularly those thiocarbamates known commonly as:
molinate (S-ethyl hexahydro-1H-azepine-1-carbothioate);
cycloate (S-ethyl N-ethylthiocyclohexanecarbamate);
EPTC (S-ethyl dipropylthiocarbamate);
butylate (S-ethyl diisobutylthiocarbamate);
diallate (S-(2,3-dichloroallyl)diisopropylthiocarbamate) and vernolate (S-propyl dipropylthiocarbamate).

Another class of pesticide which is particularly preferred is that of the anilide herbicides, preferably the subclass of these known in the art as α-haloacetanilide, or more specifically α-chloroacetanilide herbicides. Some specific compounds of this class include:
metolachlor (2-chloro-N-(2-ethyl-6-methylphenyl)-N-(2-methoxy-1-methylethyl) acetamide);
butachlor (N-butoxymethyl-2-chloro-2',6'-diethylacetanilide);
alachlor (2-chloro-2',6'-diethyl-N-(methoxymethyl) acetanilide);
acetochlor (2-chloro-N-(ethoxymethyl)-6'-ethyl-O-acetotoluidide);
metazochlor (2-chloro-N-(2,6-dimethylphenyl)-N-(1H-pyrazol-1-ylmethyl) acetamide)
pretilachlor (2-chloro-2',6'-diethyl-N-(2-propoxyethyl) acetanilide);
dimethachlor (2-chloro-N-(2-methoxyethyl)acet-2',6'-xylidide);
and
propachlor (2-chloro-N-isopropyl acetanilide).
Many other compounds of this type are disclosed in numerous patents.

As is well known in the art, the utility of many pesticides can be broadened by the inclusion of antidotes or safeners (See U.S. Patent No. 4,021,224 and 4,7708,735), and synergists in the composition. Classes of antidotes include N,N-disubstituted haloacetamides, oxazolidines, thiazolidines, sulfonamides, various halogenated esters, halogenated ketones, disulfides, imidazolines, oximes and pyridyloxy alkonic acid amides.

The prepolymers suitable to the present invention are not limited to the etherified urea-formaldehyde prepolymers as described in the prior art, but can broadly include other amino resin prepolymers with a high solubility in the organic phase and a low solubility in water.

Amino resins are a known class of polymer and are described, for instance, in "50 Years of Amino Coating Resins", Albert J. Kirsch, ed., Winchell Co. (Philadelphia), 1986. These are prepared from an amine-containing compound and formaldehyde. Amino resins generally fall into four subclasses: urea-formaldehyde, melamine-formaldehyde, benzoguanamine-formaldehyde and glycoluril-formaldehyde. The first two mentioned are preferred in this invention, with urea-formaldehyde prepolymers being most preferred.

The prepolymers melamine-formaldehyde, benzoguanamine-formaldehyde and glycoluril-formaldehyde are available commercially under the trademark CYMEL and sold by American Cyanamid Co. The amino resin prepolymers themselves can be prepared by known techniques, by the reaction between the amine and formaldehyde.

A water soluble urea-formaldehyde or melamine-formaldehyde prepolymer can also be used as the polymer forming material in an aqueous phase separation microencapsulation process. The prepolymer is added to an aqueous medium and polymerization proceeds under acidic conditions. A water soluble urea-formaldehyde or melamine-formaldehyde polymer precipitates and the polymer deposits on the oil droplets as disclosed in U.S. Patent No. 3,516,846. Formaldehyde is produced as a by-product of the wall formation process. The process hereinabove described comprising post-treating the formulation of the amino resin microcapsules with ammonia will be effective in reducing the formaldehyde of the microcapsule formulation when the prepolymer is used as the polymer forming material.

The following examples are offered as illustrative of both the process and product of the present invention.

### MOLINATE TREATMENT

### Microcapsule Formulation - Treatment 1A, 1B and 1C.

An organic solution was prepared, comprising 6.37 kg of a fully butylated urea-formaldehyde prepolymer (Beetle 80, obtained from American Cyanamid) and 0.64 kg of Mercaptate Q-43 pentaerythritol tetrakis (mercaptopropionate), sold by Cincinnati Milacron Chemicals in 84.2 kg S-ethyl hexahydro-1H-azepine-1-carbothioate (molinate) technical grade. This solution was emulsified with a high shear stirrer in 75.955 kg of water containing 2.374 kg of sodium lignosulfonate (Daxad 23) and 0.798 kg of a sodium dialkylnaphthalene sulfonate (Petro BAF). The pH of the dispersion was lowered to 2.0 with 1.0 kg of conc. sulfuric acid. The temperature was raised to 50 C and low shear stirring was continued for three hours. The dispersion was then allowed to cool to room temperature. In the untreated sample (Trt. 1A) the pH was raised to 7.0 with 1.0 kg of a 50% sodium hydroxide solution. In the treated samples (Trt. 1B and 1C) ammonia was added as 30% aqueous ammonia solution.

Microscopic observation of the dispersion revealed fully formed, discrete roughly spherical microcapsules. The capsules were an average of 12 microns in diameter.

### Formaldehyde Content and Release Rate of Molinate Capsules:

The formaldehyde content of these formulations was measured using a chromatographic column equipped with an amperometric detector. The results are reported in Table 1.

In a thermostated stoppered flask, a solution of 1.67 g molinate (4 lbs molinate/gal) microcapsule formulation in 1000 g water was stirred at 25 C for two hours. After two hours, two 10 ml samples were taken and consecutively passed through a 0.2 micron filter to remove the microcapsules. One ml of the second filtrate was extracted with 20 ml of toluene. The toluene was then analyzed by gas chromatography. The results are reported as ppm molinate in the aqueous filtrate in Table 1.

**TABLE 1**

| TRT | Post-Treatment % NH added | Formaldehyde Content % | Molinate Release |
|---|---|---|---|
| 1A | 0 | 0.44 | 98.0 ppm |
| 1B | 0.73 | 0.09 | 103.5 ppm |
| 1C | 1.50 | 0.03 | 543.3 ppm |

When the microcapsule formulation was post-treated with 0.73 % ammonia (Trt. 1B), the formaldehyde content was reduced to 0.09 %, and the core liquid release rate was similar to the untreated formulation (Trt. 1A). While the formaldehyde content of the 1.50 % ammonia post-treatment was only 0.03%, the release rate was five times higher than that of the 0.73 % treatment.

### ACETOCHLOR TREATMENT

### Microcapsule Formulation - Treatment 2A, 2B and 2C.

The organic solution consisted of 50.2 g of Beetle 1050-10 resin and 378.8 g of acetochlor (96.1% purity). Beetle 1050-10 is a partially butylated (approximately 80 %) liquid urea-formaldehyde resin obtained from American Cyanamid Company. The organic solution was dispersed in a high shear stirrer in a solution 4.0 g of sodium lignosulfonate (Reax 100M), 1.8 g sodium dialkylnaphthalene sulfonate (PETRO BAF) and 347.2 g water. The pH of the resulting emulsion was lowered to 2.0 with 0.8 g of concentrated sulfuric acid. The emulsion temperature was then raised to 50 C. Low shear stirring was continued at this temperature for 3 hours. The resulting dispersion was cooled. The formulation was post-formulated by stirring in 0.32 g Xanthum gum (Kelzan), 3.2 g attapulgite clay (Attagel 40), and 0.8 g Proxel C XL (biocide). The pH of the untreated sample (Trt. 2A) was raised to 7.0 with 50% sodium hydroxide solution. In the ammonia treated sample 2B, the pH was raised to 7.0 with 0.3 g 30% ammonia solution, and then raised to 8.0 with additional 1.3 g 30% ammonia solution. The pH was then raised to 9.0 and maintained at this pH with additional 0.5 g 30% ammonia solution. In the ammonia treated sample 2C, the pH was raised to 10.0 with 1.5 g 30% ammonia solution and maintained at pH 10.0 with additional 1.0 g 30% ammonia solution.

Microscopic observation revealed fully, well formed discrete spherical microcapsules.

### Formaldehyde Content and Release Rate of Acetochlor Capsules:

The formaldehyde content of these formulations was measured using a chromatographic column equipped with an amperometric detector. The results are reported in Table 2.

In a thermostated stoppered flask, a solution of 0.178 g acetochlor (4 lb acetochlor/gal) microcapsule formulation in 1000 g water was stirred at 25 C for two hours. After two hours, two 10 ml samples were taken and consecutively passed through a 0.2 micron filter to remove the microcapsules. One ml of the second filtrate was extracted with 20 ml of toluene. The toluene was then analyzed by gas chromatography. The results are reported as ppm acetochlor in the aqueous filtrate in Table 2.

**TABLE 2**

| TRT | Post-Treatment % NH₃ added | Formaldehyde content % | Acetochlor release |
|---|---|---|---|
| 2A | 0.0 | 0.50 | 10.55 ppm |
| 2B | 0.63 | 0.09 | 14.05 ppm |
| 2C | 0.75 | 0.03 | 9.90 ppm |

The post-treatment additions of ammonia significantly reduced the formaldehyde content of the formulation below that of the untreated sample. Additionally, the integrity of the microcapsule was maintained, as demonstrated by the acetochlor release rate for each treatment. The release rate for each treatment was the same within experimental error.

## Claims

1. A process for reducing the free content of formaldehyde for a microcapsule formulation of a substantially water-insoluble liquid material within a porous amino resin shell comprising:
(a) Providing an organic solution comprising said material and an etherified amino resin prepolymer dissolved therein in which from 50% to 98% of the methylol groups of said prepolymer have been etherified with a C₄-C₁₀ alcohol;
(b) creating an emulsion of said organic solution in a continuous phase aqueous solution comprising water and a surface-active agent, wherein said emulsion comprises discrete droplets of said organic solution dispersed in said continuous phase aqueous solution, there being formed thereby an interface between the discrete droplets of organic solution and the surrounding continuous phase aqueous solution;
(c) causing in situ self-condensation and curing of said amino resin prepolymers in the organic phase of said discrete droplets adjacent to said interface by simultaneously heating said emulsion to a temperature between 20°C to 100°C, and adding to said emulsion an acidifying agent and maintaining said emulsion at a pH of between 0 to 4 for a sufficient period of time to allow substantial completion of in situ condensation of said resin prepolymers to convert the liquid droplets of said organic solution to microsapsules consisting of solid permeable polymer shells enclosing said liquid material; and
(d) post-treating the formulation of the amino resin microcapsules with from 0.03 wt. % to 0.75 wt. % of ammonia.

2. A process according to Claim 1 wherein the amino resin prepolymer is a urea-formaldehyde, melamine-formaldehyde, benzoguanamine-formaldehyde or glycoluril-formaldehyde prepolymer.

3. A process according to Claim 1 wherein the amino resin prepolymer is a urea-formaldehyde or melamine-formaldehyde prepolymer.

4. A process according to Claim 1 wherein the amino resin prepolymer is a urea-formaldehyde prepolymer.

5. A process according to Claim 1 in which the liquid material is the herbicide acetochlor, metazochlor, pretilachlor, metoachlor, butachlor, alachlor, dimethachlor or propachlor.

6. A process according to Claim 5 in which the herbicide is acetochlor.

7. A process according to Claim 1 in which the liquid material is a thiocarbamate herbicide.

8. A process according to Claim 7 in which the thiocarbamate is EPTC.

9. A process according to Claim 7 in which the thiocarbamate is molinate.

10. A process according to Claim 1 in which the microcapsule formulation further comprises a herbcide antidote suitable for use with a thiocarbamate or haloacetanilide herbicide.

11. In the process of microencapsulation of core material by interfacial polymerization or aqueous phase separation with an amine resin prepolymer, the improvement comprising reacting the resulting amino polymer with from 0.03 wt. % to 0.75 wt. % of ammonia.

12. A method of reducing residual free formaldehyde concentration in urea formaldehyde microcapsules comprising post-treatment of the microcapsule formulation with from 0.03 wt. % to 0.75 wt. % of ammonia.

13. An etherified amino resin microcapsule formulation of a substantially water-insoluble liquid material within a porous amino resin shell produced by the process of Claim 1 characterized in that the amino resin microcapsule formulation has a free formaldehyde content no greater that 0.1% formaldehyde by weight.

14. Amino resin microcapsules produced by the process of Claim 1 wherein the liquid material is an herbicide which is either an acetanilide or a thiocarbamate characterized in that the amino resin microcapsule formulation has a free formaldehyde content no greater that 0.1% formaldehyde by weight.

15. The microcapsules according to Claim 14 further comprising an herbicide antidote suitable for use with a thiocarbamate or haloacetanilide herbicide.

## Patentansprüche

1. Verfahren zur Verringerung des Gehalts an freiem Formaldehyd einer Mikrokapselformulierung aus einem in Wasser praktisch unlöslichen flüssigen Material in einer porösen Aminoharz-Schale, bei dem:
(a) eine organische Lösung bereitgestellt wird, die das Material und ein darin gelöstes verethertes Aminoharz-Präpolymer enthält, wobei 50 % bis 98 % der Methylol-Gruppen des Präpolymers mit einem C₄-C₁₀-Alkohol verethert sind,
(b) eine Emulsion der organischen Lösung in einer wäßrigen Lösung mit kontinuierlicher Phase, die Wasser und ein grenzflächenaktives Mittel enthält, gebildet wird, wobei die Emulsion diskrete Tröpfchen der organischen Lösung aufweist, die in der wäßrigen Lösung mit kontinuierlicher Phase dispergiert sind, wodurch eine Grenzfläche zwischen den diskreten Tröpfchen aus der organischen Lösung und der umgebenden wäßrigen Lösung mit kontinuierlicher Phase gebildet wird,
(c) angrenzend an die Grenzfläche in situ die Selbstkondensation und Aushärtung der Aminoharz-Präpolymeren in der organischen Phase der diskreten Tröpfchen bewirkt wird, indem die Emulsion gleichzeitig auf eine Temperatur zwischen 20°C bis 100°C erhitzt und zu der Emulsion ein Ansäuerungsmittel gegeben und die Emulsion einen ausreichenden Zeitraum bei einem pH-Wert zwischen 0 bis 4 gehalten wird, so daß die In-situ-Kondensation der Harz-Präpolymeren im wesentlichen vollständig ablaufen kann, um die flüssigen Tröpfchen der organischen Lösung in Mikrokapseln umzuwandeln, die aus das flüssige Material einschließenden festen permeablen Polymerschalen bestehen, und
(d) die Formulierung aus Aminoharz-Kapseln mit 0,03 Gew.-% bis 0,75 Gew.-% Ammoniak nachbehandelt wird.

2. Verfahren nach Anspruch 1, wobei das Aminoharz-Präpolymer ein Harnstoff-Formaldehyd-, Melamin-Formaldehyd-, Benzoguanamin-Formaldehyd- oder Glycoluril-FormaldehydPräpolymer ist.

3. Verfahren nach Anspruch 1, wobei das Aminoharz-Präpolymer ein Harnstoff-Formaldehyd- oder Melamin-Formaldehyd-Präpolymer ist.

4. Verfahren nach Anspruch 1, wobei das Aminoharz-Präpolymer ein Harnstoff-Formaldehyd-Präpolymer ist.

5. Verfahren nach Anspruch 1, wobei das flüssige Material das Herbizid Acetochlor, Metazochlor, Pretilachlor, Metoachlor, Butachlor, Alachlor, Dimethachlor oder Propachlor ist.

6. Verfahren nach Anspruch 5, wobei das Herbizid Acetochlor ist.

7. Verfahren nach Anspruch 1, wobei das flüssige Material ein Thiocarbamat-Herbizid ist.

8. Verfahren nach Anspruch 7, wobei das Thiocarbamat EPTC ist.

9. Verfahren nach Anspruch 7, wobei das Thiocarbamat Molinat ist.

10. Verfahren nach Anspruch 1, wobei die Mikrokapselformulierung ferner ein Herbizid-Antidot enthält, das sich zur Verwendung mit einem Thiocarbamat- oder Halogenacetanilid-Herbizid eignet.

11. Verfahren zur Mikroverkapselung von Kernmaterial durch Grenzflächenpolymerisation oder Abscheidung aus der wäßrigen Phase mit einem Aminharz-Präpolymer, wobei die Verbesserung die Umsetzung des sich ergebenden Amino-Polymers mit 0,03 Gew.-% bis 0,75 Gew.-% Ammoniak umfaßt.

12. Verfahren zur Verringerung der Restkonzentration an freiem Formaldehyd in Harnstoff-Formaldehyd-Mikrokapseln, bei dem die Mikrokapsel-Formulierung mit 0,03 Gew.-% bis 0,75 Gew.-% Ammoniak nachbehandelt wird.

13. Verethertes-Aminoharz-Mikrokapsel-Formulierung eines in Wasser praktisch unlöslichen flüssigen Materials in einer nach dem Verfahren von Anspruch 1 hergestellten porösen AminoharzSchale, dadurch gekennzeichnet, daß die Aminoharz-Mikrokapsel-Formulierung einen Gehalt an freiem Formaldehyd von nicht mehr als 0,1 Gew.-% Formaldehyd hat.

14. Aminoharz-Mikrokapseln, nach dem Verfahren von Anspruch 1 hergestellt, wobei das flüssige Material ein Herbizid ist, bei dem es sich entweder um ein Acetanilid oder ein Thiocarbamat handelt, dadurch gekennzeichnet, daß die AminoharzMikrokapsel-Formulierung einen Gehalt an freiem Formaldehyd von nicht mehr 0,1 Gew.-% Formaldehyd hat.

15. Mikrokapseln nach Anspruch 14, die ferner ein Herbizid-Antidot enthalten, das sich zur Verwendung mit einem Thiocarbamat- oder Halogenacetanilid-Herbizid eignet.

## Revendications

1. Procédé pour réduire la teneur en formaldéhyde libre d'une formulation de microcapsules constituées d'une substance liquide pratiquement insoluble dans l'eau à l'intérieur d'une enveloppe d'amino-résine poreuse, comprenant les étapes consistant :
(a) à préparer une solution organique comprenant ladite substance et un prépolymère d'amino-résine éthérifié dissous, 50 % à 98 % des groupes méthylol dudit prépolymère ayant été éthérifiés avec un alcool en C₄ à C₁₀,
(b) à former une émulsion de ladite solution organique dans une solution aqueuse servant de phase continue comprenant de l'eau et un agent tensio-actif, ladite émulsion étant constituée de gouttelettes distinctes de ladite solution organique, dispersées dans ladite solution aqueuse servant de phase continue, une interface étant ainsi formée entre les gouttelettes distinctes de solution organique et la solution aqueuse environnante servant de phase continue ;
(c) à provoquer une autocondensation et un durcissement in situ dudit prépolymère d'amino-résine dans la phase organique desdites gouttelettes distinctes adjacentes à ladite interface en chauffant simultanément ladite émulsion à une température comprise dans l'intervalle de 20° à 100°C, et en ajoutant à ladite émulsion un agent acidifiant et en maintenant ladite émulsion à un pH de 0 à 4 pendant un temps suffisant pour permettre à ladite condensation in situ dudit prépolymère de résine de parvenir pratiquement à son terme pour la transformation des gouttelettes liquides de ladite solution organique en microcapsules consistant en enveloppes polymériques perméables solides entourant ladite substance liquide ; et
(d) à soumettre la formulation des microcapsules d'amino-résine à un post-traitement avec une quantité de 0,03 % en poids à 0,75 % en poids d'ammoniac.

2. Procédé suivant la revendication 1, dans lequel le prépolymère d'amino-résine est un prépolymère de résine urée-formaldéhyde, mélamine-formaldéhyde, benzoguanamine-formaldéhyde ou glycoluril-formaldéhyde.

3. Procédé suivant la revendication 1, dans lequel le prépolymère d'amino-résine est un prépolymère de résine urée-formaldéhyde ou mélamine-formaldéhyde.

4. Procédé suivant la revendication 1, dans lequel le prépolymère d'amino-résine est un prépolymère de résine urée-formaldéhyde.

5. Procédé suivant la revendication 1, dans lequel la substance liquide consiste en l'herbicide acétochlore, métazachlore, prétilachlore, métolachlore, butachlore, alachlore, diméthachlore ou propachlore.

6. Procédé suivant la revendication 5, dans lequel l'herbicide consiste en acétochlore.

7. Procédé suivant la revendication 1, dans lequel la substance liquide consiste en un herbicide du type thiocarbamate.

8. Procédé suivant la revendication 7, dans lequel le thiocarbamate consiste en EPTC.

9. Procédé suivant la revendication 7, dans lequel le thiocarbamate consiste en molinate.

10. Procédé suivant la revendication 1, dans lequel la formulation de microcapsules comprend en outre un antidote d'herbicide destiné à être utilisé avec un herbicide du type thiocarbamate ou halogénacétanilide.

11. Dans le procédé de micro-encapsulation d'une substance centrale par polymérisation interfaciale ou séparation en phase aqueuse avec un prépolymère d'aminorésine, perfectionnement comprenant la réaction de l'aminopolymère résultant avec une quantité de 0,03 % en poids à 0,75 % en poids d'ammoniac.

12. Procédé pour réduire la concentration résiduelle en formaldéhyde libre dans des microcapsules de résine urée-formaldéhyde, comprenant le post-traitement de la formulation de microcapsules avec une quantité de 0,03 % en poids à 0,75 % en poids d'ammoniac.

13. Formulation de microcapsules d'amino-résine éthérifiée, constituée d'une substance liquide pratiquement insoluble dans l'eau à l'intérieur d'une enveloppe d'aminorésine poreuse produite par le procédé suivant la revendication 1, caractérisée en ce que la formulation de microcapsules d'amino-résine a une teneur en formaldéhyde libre non supérieure à 0,1 % de formaldéhyde, en poids.

14. Microcapsules d'amino-résine produites par le procédé suivant la revendication 1, dans lesquelles la substance liquide est un herbicide qui est un acétanilide ou un thiocarbamate, caractérisées en ce que la formulation de microcapsules d'amino-résine a une teneur en formaldéhyde libre non supérieure à 0,1 % de formaldéhyde, en poids.

15. Microcapsules suivant la revendication 14, comprenant en outre un antidote d'herbicide convenable pour une utilisation avec un herbicide du type thiocarbamate ou halogénacétanilide.
